# EUROPEAN PATENT SPECIFICATION

(11) **EP 3 795 356 B1**
(45) Date of publication and mention of the grant of the patent: **26.07.2023**
(21) Application number: 19804003.2
(22) Date of filing: 17.05.2019
(51) Int. Cl.: C09J 5/06, C09J 5/04, C09J 201/08, A47K 13/30, B32B 9/00, B32B 9/04, B32B 15/082, B32B 15/085, B32B 15/088, B32B 15/09, B32B 15/18, B32B 15/20, B32B 27/08

(54) **METHOD FOR MANUFACTURING LAYERED ARTICLE, LAYERED ARTICLE, AND HEATED TOILET SEAT DEVICE**
VERFAHREN ZUR HERSTELLUNG EINES GESCHICHTETEN ARTIKELS, GESCHICHTETER ARTIKEL UND BEHEIZTE TOILETTENSITZVORRICHTUNG
PROCÉDÉ DE FABRICATION D'UN ARTICLE EN COUCHES, ARTICLE EN COUCHES ET DISPOSITIF DE SIÈGE DE TOILETTES CHAUFFÉ

(30) Priority: 18.05.2018 JP 2018096240
(43) Date of publication of application: 24.03.2021
(73) Proprietor: National Institute for Materials Science, Tsukuba-shi, Ibaraki 305-0047 (JP)
(72) Inventor: SHIGETOU, Akitsu, Tsukuba-shi, Ibaraki 305-0047 (JP); YANG, Hong Wei, Tsukuba-shi, Ibaraki 305-0047 (JP)
(74) Representative: J A Kemp LLP
(86) International application number: PCT/JP2019/019757
(87) International publication number: WO 2019/221288

(56) References cited:
- EP-A1- 2 236 575
- EP-A1- 2 335 918
- WO-A1-2008/007787
- WO-A1-2008/129726
- WO-A1-2011/010738
- JP-A- 2015 051 542
- Hülsenberg Dagmar ET AL: "Glas", Römpp online, 1 March 2011 (2011-03-01), pages 1-18, XP055940825, Retrieved from the Internet: URL:https://roempp.thieme.de/lexicon/RD-07 -01164?context=megacomplete#/ [retrieved on 2022-07-11]

## Description

### TECHNICAL FIELD

The present invention relates to a method for producing an integrated body; an integrated body; and an electric toilet seat device.

### BACKGROUND ART

As a method for producing an integrated body in which two or more substrates are bonded together, a method for producing an integrated body is required in which multiple substrates are bonded together to obtain an integrated body without applying high energy (typically high thermal energy) as much as possible in order to maintain the structure of the material included in the substrate, the function of the substrate, and the like. In particular, for bonding substrates containing a polymer, a method of bonding substrates at a temperature equal to or less than the glass transition temperature of the polymer is required.

Patent Literature 1 describes "a bonding method comprising a cleaning step including an irradiation step of irradiating a bonding face of a first material and a bonding face of a second material with an ultraviolet ray in a state that the first material and the second material are separated from each other, an exposure step of exposing at least one of the bonding face of the first material or the bonding face of the second material to a bridge component, and a connection step of connecting the bonding face of the first material with the bonding face of the second material".

EP-A-2335918 describes a method of manufacturing a joined structure formed by joining two joining materials. The method includes a joining medium layer forming step and a joining step. In the joining medium layer step, a joining medium layer is formed on a joining surface of at least one of the two joining materials. The joining medium layer includes one or more of elements selected from a group consisting of hydrogen gas, steam gas, alcohol gas, hydrogen peroxide gas, organometallic compound, and silane coupling agent. In the joining step, the two joining materials arranged one over the other via the joining medium layer are heated and/or irradiated by electromagnetic waves.

### CITATION LIST

### PATENT LITERATURE

PATENT LITERATURE 1: JP-A-2015-51542

### SUMMARY OF INVENTION

### TECHNICAL PROBLEM

The present inventors have, for example, bonded substrates including various materials using the above-described conventional bonding method of Patent Literature 1, observed the structure of the bonded interfaces and investigated long-term reliability in adhesion over a certain duration, and studied how the method could be improved. As a result, it has been found that some integrated bodies formed using the above-described conventional bonding method have room for improvement in long-term reliability, that is, in the adhesion between the substrates after a certain period from the producing.

The present inventors have also found that this tendency is more remarkable in the case that a substrate containing a polymer and a substrate containing metal atoms are bonded.

Therefore, an object of the present invention is to provide a method for producing an integrated body, in which an integrated body having excellent long-term reliability can be produced.

Another object of the present invention is also to provide such an integrated body and an electric toilet seat device.

### SOLUTION TO PROBLEM

As a result of intensive studies to achieve the above-described object, the present inventors have found that the above-described object can be achieved by the following configuration.

Various aspects of the present invention for solving the problem described above are as follows.
[1]. A method for producing an integrated body having, in a stated order, a first substrate that contains metal atoms, a bridge layer, and a second substrate that contains a polymer, the method comprising:
   a step A in which, in an atmosphere that contains at least one alcohol compound selected from the group consisting of primary alcohols and secondary alcohols, the first substrate and the second substrate are each irradiated with an ultraviolet ray,
   a precursor layer (a) that contains a metal carboxylate compound in which the metal atoms and a carboxylic acid are joined is formed on the first substrate, and
   a precursor layer (b) that contains a cross-linkable polymer in which a cross-linkable group is joined to the polymer is formed on the second substrate; and
   a step B in which the precursor layer (a) and the precursor layer (b) are brought into contact with each other and the bridge layer is formed to produce the integrated body;
   wherein the metal atoms contained in the first substrate are metal atoms of the group 3 to the group 13 and the content of the metal atoms in the first substrate is more than 50% by mass based on the total mass of the first substrate.
[2]. The method for producing an integrated body according to the item [1], wherein the metal atoms are capable of forming a hydrate.
[3]. The method for producing an integrated body according to the item [1] or [2], further comprising a step C in which the integrated body is heated after the step B.
[4]. The method for producing an integrated body according to any one of the items [1] to [3], wherein the ultraviolet ray is a vacuum ultraviolet ray.
[5]. An integrated body comprising:
   a first substrate that contains metal atoms; a bridge layer; and a second substrate that contains a polymer, in a stated order, wherein
   the bridge layer contains metal atoms of the same kind as the metal atoms, and a specific polymer different from the polymer contained in the second substrate,
   the specific polymer is a polymer in which a group having a carboxy group is joined to the polymer contained in the second substrate, and
   at least a part of the carboxy group is joined to the metal atoms in the bridge layer;
   wherein the metal atoms contained in the first substrate are metal atoms of the group 3 to the group 13 and the content of the metal atoms in the first substrate is more than 50% by mass based on the total mass of the first substrate.
[6]. The integrated body according to the item [5], wherein the first substrate is a heating element, and the second substrate is a toilet seat.
[7]. An integrated body comprising:
   a first substrate that contains metal atoms; a bridge layer; and a second substrate that contains a polymer, in a stated order, wherein
   the bridge layer contains metal atoms of the same kind as the metal atoms, and a specific polymer different from the polymer contained in the second substrate,
   the specific polymer is a polymer in which a group having a carboxy group is joined to the polymer contained in the second substrate, and
   at least a part of the carboxy group is joined to the metal atoms in the bridge layer;
   wherein the first substrate is a heating element, and the second substrate is a toilet seat.
[8]. An electric toilet seat device comprising the integrated body according to the item [6] or [7].

### ADVANTAGEOUS EFFECTS OF INVENTION

According to the present invention, it is possible to provide a method for producing an integrated body, in which an integrated body having excellent long-term reliability can be produced.

Furthermore, according to the present invention, it is also possible to provide such an integrated body and an electric toilet seat device.

### BRIEF DESCRIPTION OF DRAWINGS

FIG. 1 is a schematic view showing an operation of irradiating a first substrate and a second substrate with an ultraviolet ray in a predetermined atmosphere in a step A.
FIG. 2 is a schematic view of a first substrate with a precursor layer (a) and a second substrate with a precursor layer (b) obtained by irradiating each substrate with the ultraviolet ray in the step A.
FIG. 3 is a schematic view showing an operation of bringing the first substrate with a precursor layer (a) and the second substrate with a precursor layer (b) into contact with each other so that the precursor layers face each other in a step B.
FIG. 4 is a schematic view showing an integrated body produced by a method for producing an integrated body according to an embodiment of the present invention.
FIG. 5 shows O1s spectra of an Al substrate with a precursor layer (a) irradiated with an ultraviolet ray under different conditions of relative humidity of ethanol in the atmosphere and an O1s spectrum of the Al substrate before the irradiation with an ultraviolet ray.
FIG. 6 shows a result of separating the waveform of the O1s spectrum of the Al substrate before irradiation with the ultraviolet ray to identify the chemical bond state from which each peak energy originates.
FIG. 7 shows a result of separating the waveform of the O1s spectrum of the Al substrate with a precursor layer (a) under the condition of a relative humidity of ethanol in the atmosphere of 9.45 RH% and identifying the chemical bond state from which each peak energy originates.
FIG. 8 shows a result of separating the waveform of the O1s spectrum of the Al substrate with a precursor layer (a) under the condition of a relative humidity of ethanol in the atmosphere of 24.85 RH% and identifying the chemical bond state from which each peak energy originates.
FIG. 9 shows measurement results of FT-IR (Fourier transform infrared spectrometer) of a substrate with a precursor layer (a) prepared under the conditions of a relative humidity of ethanol in the atmosphere of 5.2 RH% and 26.6 RH%, and a measurement result, as a comparison, of FT-IR of an Al substrate before irradiation with an ultraviolet ray.
FIG. 10 is a transmission electron microscope (TEM) image of a bonding interface (bridge layer) between an Al substrate and a polyimide substrate.
FIG. 11 is an enlarged view of the bridge layer in the transmission electron microscope (TEM) image of the bonding interface (bridge layer) between the Al substrate and the polyimide substrate.
FIG. 12 is a perspective view showing a main part of an electric toilet seat device according to an embodiment of the present invention.
FIG. 13 is a schematic cross-sectional view of the electric toilet seat device with the toilet seat closed.

### DESCRIPTION OF EMBODIMENTS

Hereinafter, the present invention will be described in detail.

The claimed requirements will be sometimes described below relying on illustration of typical embodiments of the present invention, but the present invention is not limited to such embodiments.

In the present description, a numerical range represented by "-" or "to" means a range including numerical values described before and after "-" or "to" as a lower limit and an upper limit.

Concerning a notation of a functional group (atom group) in the present description, a notation not describing substitution and non-substitution refers to both the group having no substituent and the group having a substituent as long as an effect of the present invention is not impaired. For example, the term "alkyl group" refers to not only an alkyl group having no substituent (unsubstituted alkyl group) but also an alkyl group having a substituent (substituted alkyl group). A notation of each compound refers in the same manner.

In the present description, the notation "(meth)acrylate" means both acrylate and methacrylate, or either acrylate or methacrylate, and the notation "(meth)acrylic" means both acrylic and methacrylic, or either acrylic or methacrylic. Furthermore, the notation "(meth)acryloyl" means both acryloyl and methacryloyl, or either acryloyl or methacryloyl.

### [Method for Producing Integrated body]

A method for producing an integrated body according to an embodiment of the present invention is a method for producing an integrated body having, in a stated order, a first substrate that contains metal atoms, a bridge layer, and a second substrate that contains a polymer, the method including: a step A in which, in an atmosphere that contains at least one alcohol compound selected from the group consisting of primary alcohols and secondary alcohols, the first substrate and the second substrate are each irradiated with an ultraviolet ray, a precursor layer (a) that contains a metal carboxylate compound in which the metal atoms and a carboxylic acid are joined is formed on the first substrate, and a precursor layer (b) that contains a cross-linkable polymer in which a cross-linkable group is joined to the polymer is formed on the second substrate; and a step B in which the precursor layer (a) and the precursor layer (b) are brought into contact with each other and the bridge layer is formed to produce the integrated body; wherein the metal atoms contained in the first substrate are metal atoms of the group 3 to the group 13 and the content of the metal atoms in the first substrate is more than 50% by mass based on the total mass of the first substrate.

In other words, the above-described method for producing an integrated body is the following method for producing an integrated body.

A method for producing an integrated body having, in a stated order, a first substrate that contains metal atoms, a bridge layer, and a second substrate that contains a polymer, the method including:
a step A in which, in an atmosphere that contains at least one alcohol compound selected from the group consisting of primary alcohols and secondary alcohols, the first substrate and the second substrate are each irradiated with an ultraviolet ray, and
a first substrate with a precursor layer (a) in which the precursor layer (a) is formed on the first substrate and
a second substrate with a precursor layer (b) in which the precursor layer (b) is formed on the second substrate are obtained,
the precursor layer (a) containing a metal carboxylate compound in which the metal atoms and a carboxylic acid are joined, and
the precursor layer (b) containing a cross-linkable polymer in which a cross-linkable group is joined to the polymer; and
a step B in which the first substrate with the precursor layer (a) and the second substrate with the precursor layer (b) are brought into contact with each other so that the precursor layer (a) and the precursor layer (b) face each other and the bridge layer between the first substrate and the second substrate is formed to produce the integrated body;
wherein the metal atoms contained in the first substrate are metal atoms of the group 3 to the group 13 and the content of the metal atoms in the first substrate is more than 50% by mass based on the total mass of the first substrate.

In other words, the above-described method for producing an integrated body is the following method for producing an integrated body.

A method for producing an integrated body having, in a stated order, a first substrate that contains metal atoms, a bridge layer, and a second substrate that contains a polymer, the method including: a step A in which, in an atmosphere containing at least one alcohol compound selected from the group consisting of primary alcohols and secondary alcohols, the first substrate and the second substrate are each irradiated with an ultraviolet ray, and the first substrate with a precursor layer (a) in which the precursor layer (a) that contains a metal carboxylate compound in which the metal atoms and a carboxylic acid are joined is formed on the first substrate and the second substrate with a precursor layer (b) in which the precursor layer (b) that contains a cross-linkable polymer in which a cross-linkable group is joined to the polymer is formed on the second substrate are obtained; and a step B in which the first substrate with the precursor layer (a) and the second substrate with the precursor layer (b) are brought into contact with each other so that the precursor layer (a) and the precursor layer (b) face each other and the bridge layer between the first substrate and the second substrate is formed to produce the integrated body; wherein the metal atoms contained in the first substrate are metal atoms of the group 3 to the group 13 and the content of the metal atoms in the first substrate is more than 50% by mass based on the total mass of the first substrate.

The mechanism by which the integrated body obtained by the above-described method for producing an integrated body has excellent long-term reliability is not necessarily clear, but the present inventors presume as follows. The mechanism described below is based on a presumption, and a case in which an effect of the present invention is obtained by a mechanism other than the following mechanism is included in the scope of the present invention.

The present inventors have intensively studied the cause of the tendency that the adhesive strength between the substrates of the integrated body obtained by the bonding method described in Patent Literature 1 is decreased with time. As a result, it has been found that the tendency is particularly remarkable in the case that water (typically, water vapor) is present in the environment where the integrated body obtained by the above-described bonding method is held (typically used on-site). This fact suggests the possibility that the adhesive strength between the substrates (particularly, the adhesive strength of the bridge layer) will be decreased with time owing to water molecules, and as the mechanism for this fact, it was presumed that the bonding between the substrates (typically, the bridge layer) was dissociated by hydrolysis.

That is, it was presumed that the water molecules in the external environment diffused in the bridge layer using the bonding interface between the substrates as a path and dissociated the bridging between the substrates. It was considered that, in particular, in the case that at least one of the substrates contained a polymer, the above-described tendency was more remarkable because the substrate itself was easily permeated with water molecules.

The present invention has been completed based on the above-described findings, and one of the characteristics is that the precursor layer (a) containing the metal carboxylate compound and the precursor layer (b) containing the cross-linkable polymer form the bridge layer. It is presumed that in the integrated body obtained in this manner, the joining between the carboxylic acid and the metal atoms in the bridge layer, that is, the joining between the carboxylic and the metal atoms (hereinafter, also referred to as "metal carboxylate structure" in the present description) contributes to the bonding between the first substrate and the second substrate. The joining is typically due to a coordinate linkage, the joining itself is strong, in addition, the formation reaction of the joining is reversible, and it is presumed that even when the joining partially dissociates (hydrolyzes), rejoining can occur at the same time. It is presumed that in the integrated body produced by the method for producing an integrated body according to an embodiment of the present invention, because the dissociation and the formation of the metal carboxylate structure are in equilibrium in the bridge layer, the integrated body has excellent long-term reliability, in other words, excellent water resistance.

Hereinafter, each step in the method for producing an integrated body according to an embodiment of the present invention will be described.

### [Step A]

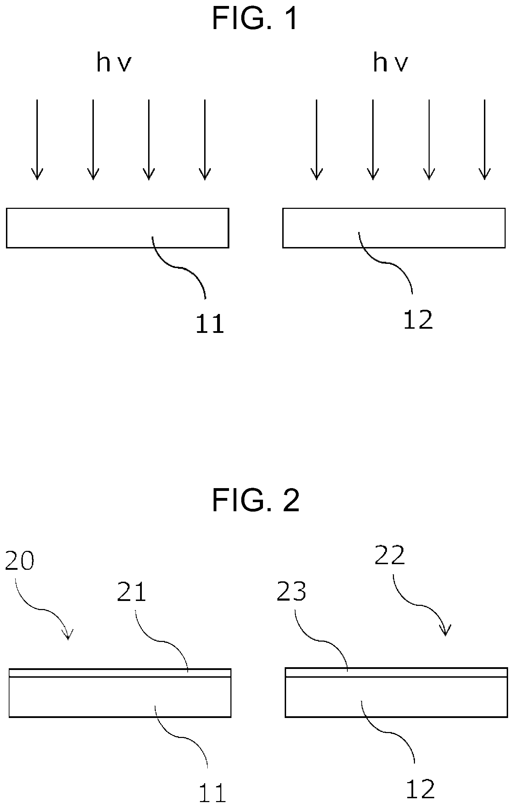

The step A is a step in which, in an atmosphere that contains at least one alcohol compound selected from the group consisting of primary alcohols and secondary alcohols (hereinafter also referred to as "specific alcohol"), a first substrate and a second substrate are each irradiated with an ultraviolet ray, a precursor layer (a) that contains a metal carboxylate compound in which metal atoms and a carboxylic acid are joined is formed on the first substrate (that is, the first substrate with the precursor layer (a) is formed), and a precursor layer (b) that contains a cross-linkable polymer in which a cross-linkable group is joined to a polymer is formed on the second substrate (that is, the second substrate with the precursor layer (b) is formed). Hereinafter, the step will be described with reference to FIGS. 1 and 2.

FIG. 1 is a schematic view showing an operation of irradiating a first substrate and a second substrate with an ultraviolet ray in a predetermined atmosphere in the step A. FIG. 1 shows a state of irradiating a first substrate and a second substrate with an ultraviolet ray from one main face side of each of a first substrate 11 and a second substrate 12.

### <First Substrate>

The first substrate is a substrate containing metal atoms. In the present description, the term "containing metal atoms" means that the first substrate contains metal atoms as a material component.

In the method of the present invention, the substrate contains the metal atoms as a material component at a content of more than 50% by mass based on the total mass of the substrate (hereinafter, such a substrate is also referred to as a "metal substrate"), preferably 80% by mass or more, and more preferably 90% by mass or more. The metal substrate may contain two or more metal atoms, and in this case, the total content of the metal atoms is preferably within the above-described range.

In the method of the present invention, the metal atoms contained in the first substrate are metal atoms of the group 3 to the group 13, and metal atoms capable of forming a hydrate is preferable.

Among the metal atoms, at least one selected from the group consisting of Ti (titanium), Zr (zirconium), Hf (hafnium), V (vanadium), Nb (niobium), Ta (tantalum), Cr (chrome), Mo (molybdenum), W (tungsten), Mn (manganese), Fe (iron), Co (cobalt), Ni (nickel), Cu (copper), Ag (silver), Zn (zinc), Al (aluminum), In (indium), Sn (tin), and Pb (lead) is preferable, and at least one selected from the group consisting of, Ti, Ta, Cr, Fe, Ni, Cu, Ag, Zn, Al, Sn, and Pb is more preferable as the metal atoms from the viewpoint of obtaining an integrated body having a more excellent effect of the present invention.

The first substrate may contain one metal atom singly as a material component. In this case, the first substrate may mainly include a simple substance of the metal, or may further contain non-metal atoms.

In the case that the first substrate further contains non-metal atoms, the non-metal atoms is not particularly limited, and examples of the non-metal atoms include carbon, nitrogen, oxygen, and hydrogen, and typical examples include oxygen.

In the case that the first substrate contains metal atoms and non-metal atoms as material components, examples of the form of the first substrate include metal substrates having an oxide film on the surface, but are not limited thereto.

In the case that the first substrate contains metal atoms and non-metal atoms, the first substrate may have a form in which the metal atoms and the non-metal atoms are uniformly present in the entire substrate, or may have a form in which either the metal atoms or the non-metal atoms are localized in a part of the substrate. Typical examples of the latter include complexes having a metal substrate, a metal oxide layer and/or a metal nitride layer formed on the metal substrate, and the like.

In the case that the first substrate contains one type of metal atoms and non-metal atoms, the constitution structure of the first substrate is not particularly limited, and may be a solid solution, a eutectic mixture, an intermetallic compound, or a structure in which these constitution structures coexist.

The first substrate may contain two or more types of metal atoms as a material component, and may further contain non-metal atoms.

In this case, the constitution structure of the first substrate is not particularly limited, and may be an alloy, a solid solution, a eutectic mixture, an intermetallic compound, or a structure in which these constitution structures coexist.

The size and the shape of the first substrate are not particularly limited and can be freely selected depending on the application. Examples of the shape of the first substrate include planar shapes, three-dimensional shapes including a curved face, and combinations thereof.

The thickness of the first substrate is not particularly limited and can be freely selected depending on the application. Typically, the thickness of the first substrate is generally preferably 50 nm to 100 mm.

The first substrate may be in the form of being formed on another support. Typically, the first substrate may be in the form of being formed so as to cover at least a part of the surface of the support. More specifically, the first substrate may be in the form of being layered on the support (for example, the first substrate formed on the support by vapor deposition). The other support is not particularly limited, and may be, for example, an inorganic material such as ceramics or an organic material such as a synthetic resin.

### <Second Substrate>

The second substrate is a substrate containing a polymer. In the present description, the term "containing a polymer" means that the second substrate contains a polymer as a material component.

The content of the polymer in the substrate containing the polymer is not particularly limited, and generally, the substrate preferably contains the polymer as a material component at a content of more than 50% by mass based on the total mass of the substrate (hereinafter, such a substrate is also referred to as a "polymer substrate"), more preferably 80% by mass or more, and still more preferably 90% by mass or more. The second substrate may contain two or more polymers, and in this case, the total content of all polymers is preferably within the above-described range.

The polymer (resin) is not particularly limited, and known polymers can be used.

Examples of the polymer include
polyolefin-based polymers such as polyethylene, polypropylene, and cyclic polyolefins;
polyvinyl acetate-based polymers such as polyvinyl acetate and ethylene-vinyl acetate copolymers;
polyvinyl acetal-based polymers such as polyvinyl butyral;
polyester-based polymers such as polyethylene terephthalate (PET), polybutylene terephthalate (PBT), polyethylene naphthalate, poly ε-caprolactone, polyhydroxybutyrate, polyhydroxyvalerate, and liquid crystal polyesters (LCP) (such as wholly aromatic polyesters);
polyamide-based polymers such as nylon 6, nylon 66, and nylon 12;
polyether-based polymers such as polyethylene glycol, polyether sulfone, polyphenylene sulfide, and polyphenylene oxide;
chlorine-containing polymers such as polyvinyl chloride and polyvinylidene chloride;
fluorine-containing polymers such as polyvinylidene fluoride, perfluoroalkoxy alkanes, and perfluoroethylene alkene copolymers;
acrylic-based polymers such as polymethyl (meth)acrylate, polyethyl (meth)acrylate, polyacrylonitrile, and an acrylonitrile-styrene-butadiene copolymer (ABS);
polyketone (particularly aromatic polyketone)-based polymers such as polyether ether ketone (PEEK) and polyaryl ether ketone (PAEK);
polyimide-based polymers;
polycarbonate (PC); and
copolymers thereof.

Among the polymers, polyether ether ketone (PEEK), liquid crystal polyesters (LCP), polyaryl ether ketone (PAEK), polybutylene terephthalate (PBT), an acrylonitrile-styrene-butadiene copolymer (ABS), PET, and polyimide-based polymers are preferable, and polyimide-based polymers are more preferable from the viewpoint of obtaining an integrated body having a more excellent effect of the present invention.

The polyimide-based polymers are not particularly limited as long as they are a polymer including a repeating unit having an imide bond, and aromatic polyimides are preferable. Examples of the aromatic polyimides include polymers prepared by polymerizing an aromatic diamine and an acid anhydride.

Examples of the aromatic diamine include paraphenylenediamine, metaphenylenediamine, benzidine, paraxylylenediamine, 4,4'-diaminodiphenyl ether, 3,4'-diaminodiphenyl ether, 4,4'-diaminodiphenylmethane, 4,4'-diaminodiphenyl sulfone, 3,3'-dimethyl-4,4'-diaminodiphenylmethane, 1,5-diaminonaphthalene, 3,3'-dimethoxybenzidine, 1,4-bis(3-methyl-5-aminophenyl)benzene, and amide-forming derivatives thereof.

Examples of the acid anhydride component (or amide-forming derivative of acid) include pyromellitic acid, 3,3',4,4'-diphenyltetracarboxylic acid, 2,3',3,4'-diphenyltetracarboxylic acid, 3,3',4,4'-benzophenone tetracarboxylic acid, 2,3,6,7-naphthalene tetracarboxylic acid, 2,2-bis(3,4-dicarboxyphenyl) ether, and anhydrides of aromatic tetracarboxylic acids such as pyridine-2,3,5,6-tetracarboxylic acid.

Furthermore, as another form of the polymer, it is also preferable that the polymer (before the irradiation with an ultraviolet ray in an alcohol atmosphere for forming the precursor layer (b)) have substantially no cross-linkable group such as a hydroxy group, a carboxy group, an ethylenically unsaturated group, an amino group, and an epoxy group. The term "have substantially no" means that the repeating unit of the polymer has no cross-linkable group. As another form of the polymer, it is also preferable that the polymer have substantially no silicon atom.

Furthermore, as another form of the polymer, the polymer preferably has a partial structure in which a carbon atom and a hetero atom are joined to at least one selected from the group consisting of a backbone chain and side chains with a binding energy (theoretical value) of 1,000 kJ/mol or less, and the binding energy is more preferably 600 kJ/mol or less.

In the case that the polymer has carbon/hetero atoms joined with a binding energy within the above-described range, the joining may be easily dissociated by an ultraviolet ray when the second substrate is irradiated with the ultraviolet ray, and as a result, a cross-linkable group may be easily generated.

More specifically, the polymer may have a repeating unit represented by Formula (1) shown below.

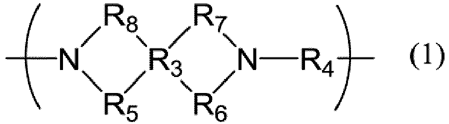

In Formula (1) shown above, R₃ represents a tetravalent linking group, R₄ represents a divalent linking group, and R₅ to R₈ represent a carbonyl group. Note that R₃ representing a tetravalent linking group and R₄ representing a divalent linking group are the same as R₃ and R₄ in Formula (2) described later.

The number of repeating units in this formula may be the number at which the polymer has the above-described average molecular weight.

The size and the shape of the second substrate are not particularly limited and can be freely selected depending on the application. Examples of the shape of the second substrate include planar shapes, three-dimensional shapes including a curved face, and combinations thereof.

The thickness of the second substrate is not particularly limited and can be freely selected depending on the application. The thickness of the second substrate is generally preferably 50 nm to 10 mm particularly from the viewpoint of obtaining an integrated body having a more excellent effect.

The second substrate may be in the form of being formed on another support. Typically, the second substrate may be in the form of being formed so as to cover at least a part of the surface of the support. More specifically, the second substrate may be in the form of a thin film that is (temporarily) fixed to the support. The other support is not particularly limited, and may be, for example, an inorganic material such as ceramics or an organic material such as a synthetic resin.

When the first substrate and the second substrate are irradiated with an ultraviolet ray in a predetermined atmosphere, a precursor layer is formed on each substrate. At this time, the wavelength of the ultraviolet ray for the irradiation is not particularly limited, and is generally preferably 400 nm or less, and, from the viewpoint of obtaining an integrated body having a more excellent effect of the present invention, more preferably 200 nm or less (in the present description, an ultraviolet ray having a wavelength of 200 nm or less is also referred to as a vacuum ultraviolet ray).

The lower limit of the wavelength of the ultraviolet ray is not particularly limited, and is generally preferably 10 nm or more.

The method of irradiating the first substrate and the second substrate with an ultraviolet ray is not particularly limited, and examples of the method include a method in which a known ultraviolet irradiation device is used.

Although not intending to be bound by theory, the following theory can be presumed about the irradiation time of an ultraviolet ray for forming the precursor.

The formation of the precursor layer is proportional to the number of radical species obtained by dissociation of alcohol molecules in an atmosphere of irradiation with a vacuum ultraviolet ray, and the formation reaction is rate-determined at a certain amount. That is, the formation of the precursor layer can be defined by the product of the density of the introduced alcohol molecules and the irradiation time. The rate-determining amount depends on the original chemical structure of the substrate, and in most polymers, a sufficient amount of precursor can be formed within about 10 minutes in the case that alcohol is introduced at an ordinary temperature and a relative humidity of 20 to 50% that are equivalent to normal air.

In FIG. 1, the first substrate 11 and the second substrate 12 are each irradiated with an ultraviolet ray simultaneously, but the method for producing an integrated body according to the present invention is not limited thereto, and the first substrate 11 and the second substrate 12 may be irradiated with an ultraviolet ray in order from either the first substrate 11 or the second substrate 12. In the case of simultaneous irradiation, multiple first substrates and/or second substrates may be irradiated.

Also, in FIG. 1, the sheet-shaped first substrate 11 and the sheet-shaped second substrate 12 are irradiated with an ultraviolet ray from one main face side of each substrate, but the method according to the present invention is not limited thereto, and the substrates may be irradiated with an ultraviolet ray from both main face sides of each substrate. The direction in which the substrate is irradiated with an ultraviolet ray is not particularly limited.

The irradiation with an ultraviolet ray is performed in an atmosphere containing a specific alcohol. The atmosphere is not particularly limited as long as it contains a specific alcohol, and may contain another component. The specific alcohol in the atmosphere may be in a gaseous state, in a mist (droplet) state, or a mixture of a gas and a mist.

The atmosphere may contain a component other than the specific alcohol. The other component is not particularly limited, and is preferably an inert gas from the viewpoint of obtaining an integrated body having a more excellent effect of the present invention. Examples of the inert gas include nitrogen, helium, neon, argon, and mixtures thereof, and among the inert gases, gases containing nitrogen are preferable, and nitrogen is preferable.

The pressure in this step is not particularly limited, and may be typically atmospheric pressure. For example, an atmospheric pressure nitrogen atmosphere containing the atomized specific alcohol is preferable.

The content of the specific alcohol in the atmosphere is not particularly limited, and is preferably varied in an environment of a relative humidity of 1 to 100% RH using the irradiation amount with an ultraviolet ray by kg·s·m⁻³ as a parameter. The irradiation amount of the specific alcohol with an ultraviolet ray in the atmosphere can be measured by (relative humidity) × (saturated vapor pressure of specific alcohol) × (irradiation time of ultraviolet ray).

The relative humidity of the specific alcohol in the atmosphere can be measured using a relative humidity measuring device.

The relative humidity of the specific alcohol in the atmosphere is not particularly limited, and is preferably 3.0% RH or more, and more preferably 10.0% RH or more, and still more preferably 30.0% RH or less from the viewpoint of obtaining an integrated body having a more excellent effect of the present invention.

The atmosphere may contain one kind of the specific alcohol singly or may contain two or more kinds thereof. In the case that the atmosphere contains two or more kinds of the specific alcohols, the total content of the specific alcohols in the atmosphere is preferably within the above-described range.

The specific alcohol is at least one type of alcohol compound selected from the group consisting of primary alcohols and secondary alcohols.

It is considered that if the specific alcohol is used, a hydroxy radica and a CH radical may be easily generated in irradiation with an ultraviolet ray, and then a carboxy group may be easily generated. As a result, an integrated body having excellent long-term reliability can be obtained.

The number of the carbon atoms in the alcohol compound is preferably 1 to 5 particularly from the viewpoint of easily obtaining an integrated body having a more excellent effect of the present invention. Examples of such an alcohol compound include methanol, ethanol, 1-propanol, 1-butanol, 1-pentanol, 2-propanol, 2-butanol, 2-pentanol, isobutyl alcohol, isoamyl alcohol, tert-butyl alcohol, and tert-amyl alcohol.

Among the alcohol compounds, primary alcohols having 1 to 5 carbon atoms are preferable, and from the viewpoint of reduced harmfulness (i.e. less tendency in generating formaldehyde, formic acid, and the like that are harmful in the human body), primary alcohols having 2 to 5 carbon atoms are more preferable, ethanol, 1-propanol, 1-butanol, and 1-pentanol are still more preferable, ethanol and 1-propanol are particularly preferable, and ethanol is the most preferable.

The atmospheric temperature in this step is not particularly limited, and is generally preferably 5 to 70°C, and more preferably 15 to 30°C during irradiation with an ultraviolet ray (particularly a vacuum ultraviolet ray).

When the atmospheric temperature is 70°C or less, damage such as softening is less likely to occur on the second substrate. The atmospheric temperature is preferably 5°C or more because the specific alcohol itself is less likely to freeze at such a temperature.

When the first substrate and the second substrate are irradiated with an ultraviolet ray (typically, a vacuum ultraviolet ray) in an atmosphere containing the specific alcohol, a precursor layer (a) and a precursor layer (b) are formed on the first substrate and the second substrate, respectively, thereby obtaining substrates with a precursor layer. These precursor layers are capable of forming a bridge layer by contact with each other in the step B described later.

In general, the first substrate containing metal atoms often has a layer containing an oxide of the above-described metal atom (metal oxide layer), and/or a contamination layer (pollutant layer) formed on the outermost surface. Generally, the contamination layer often contains an organic compound.

It is presumed that, when the first substrate is irradiated with an ultraviolet ray in an atmosphere containing the specific alcohol, the contamination layer physically adsorbed on the first substrate is removed by the energy of the ultraviolet ray.

Although not intending to be bound by theory, it is considered that the mechanism for forming the precursor layer (a) in the case that the metal oxide layer is formed on the outermost surface of the first substrate is as follows. The specific alcohol is dissociated by the energy of an ultraviolet ray, and radical species such as a hydroxy radical, a hydrogen radical, and a CH radical are generated. Among the radicals, the hydrogen radical reduces at least a part of the metal oxide layer on the outermost surface of the first substrate to generate a cation site on the first substrate. Then, the hydroxyl radical and/or the CH radical act on the cation site to form a precursor layer (a) containing a metal carboxylate compound in which metal atoms and a carboxylic acid are joined on the first substrate.

At this time, the precursor layer (a) may be formed on at least a part of the first substrate, and may be formed on the entire surface of the first substrate.

The thickness of the precursor layer (a) is not particularly limited, and is generally preferably 5 nm to 10 mm.

In an atmosphere containing the specific alcohol, when the second substrate is irradiated with an ultraviolet ray, the above-described cross-linkable group (a hydroxy group, a carboxy group, an ethylenically unsaturated group, an amino group, or the like as a non-limiting example), typically a hydroxy group is added to the backbone chain and/or the side chain of the polymer by the radical species generated by the energy of the ultraviolet ray. Thus, on the second substrate, a polymer having a structure different from that of the polymer contained in the second substrate (so-called bulk portion), specifically, a polymer to which a cross-linkable group is added (cross-linkable polymer) is included. In other words, a precursor layer (b) containing a cross-linkable polymer is formed on the second substrate.

At this time, the precursor layer (b) may be formed on at least a part of the second substrate, or may be formed on the entire surface of the second substrate.

The thickness of the precursor layer (b) is not particularly limited, and is generally preferably 5 nm to 10 mm.

FIG. 2 shows a schematic view of a first substrate with a precursor layer (a) 20 having a precursor layer (a) (21) containing a metal carboxylate compound on the first substrate 11, and a second substrate with a precursor layer (b) 22 having a precursor layer (b) (23) containing a cross-linkable polymer on the second substrate 12.

In FIG. 2, the precursor layer (a) (21) is formed on one main face side of the first substrate 11, and the precursor layer (b) (23) is formed on one main face side of the second substrate 12. However, the first substrate with the precursor layer (a) and the second substrate with the precursor layer (b) that are obtained in this step are not limited thereto, and a precursor layer may be formed on both main faces of the first substrate and/or the second substrate.

Furthermore, in FIG. 2, the precursor layer is formed on the entire surface of each substrate, but the method for producing an integrated body according to the present invention is not limited thereto, and the precursor layer is required to be formed on at least a part of the surface of each substrate.

### [Step B]

The step B is a step in which the first substrate with the precursor layer (a) and the second substrate with the precursor layer (b) are brought into contact with each other so that the precursor layer (a) and the precursor layer (b) face each other and the bridge layer is formed between the first substrate and the second substrate.

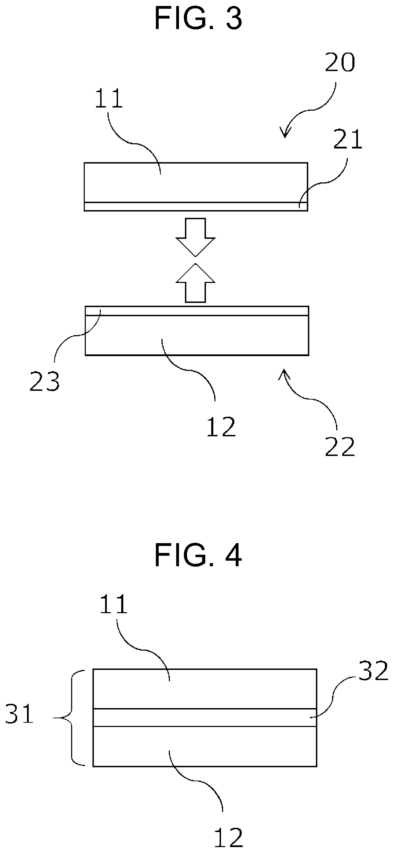

The flow of this step will be described with reference to FIGS. 3 and 4. FIG. 3 is a schematic view showing an operation of bringing a first substrate with a precursor layer (a) 20 and a second substrate with a precursor layer (b) 22 into contact with each other so that the precursor layers face each other in the step B.

In this step, the atmosphere in which the two substrates are brought into contact with each other is not particularly limited, and in general, the same atmosphere as the atmosphere in the step A is preferable, and the atmosphere may be normal air.

The temperature at which the two substrates are brought into contact with each other is not particularly limited, and is generally preferably 15 to 30°C, and may be around ordinary temperature.

When the substrates are each brought into contact with each other, the substrates may each be pressurized if necessary.

It is presumed that when the first substrate with a precursor layer (a) 20 and the second substrate with a precursor layer (b) 22 are brought into contact with each other so that the precursor layers face each other (are opposed to each other), the metal carboxylate compound in the precursor layer (a) reacts with the cross-linkable group of the cross-linkable polymer in the precursor layer (b). It is presumed that the metal carboxylate compound is typically added to the cross-linkable group of the cross-linkable polymer.

As a result, an integrated body 31 having the first substrate 11, a bridge layer 32, and the second substrate 12 in the stated order is formed as shown in FIG. 4. At this time, the bridge layer contains a specific polymer formed by joining a group having a carboxy group to the same polymer as the polymer contained in the second substrate, and the same kind of metal atoms as the metal atoms contained in the first substrate, and at least a part of the metal atoms are joined to the carboxy group of the specific polymer.

The group having a carboxy group in the specific polymer is typically formed by joining the cross-linkable group, which is included in the cross-linkable polymer, and the metal carboxylate compound.

The bridge layer formed by this step contains the above-described components. In other words, it can be said that the metal atoms that is the constituent material of the first substrate diffuse from the first substrate, the polymer that is the constituent material of the second substrate diffuses from the second substrate, and the metal atoms and the polymer are joined in a metal carboxylate structure to form a bridge layer. The integrated body that is obtained by the method for producing an integrated body according to the present embodiment and has the bridge layer having such a structure between the first substrate and the second substrate has excellent long-term reliability.

### <Specific Polymer>

The specific polymer is a polymer in which a group having a carboxy group is joined to the polymer contained in the second substrate. That is, the specific polymer is a polymer having a structure at least partially different from that of the polymer contained in the second substrate. Here, the group having a carboxy group is not particularly limited as long as it has at least one carboxy group. The position of the joining between the group having a carboxy group and the polymer is not particularly limited. The group having a carboxy group may be joined to the backbone chain, the side chain, or both the backbone chain and the side chain of the polymer.

The bridge layer may contain one kind of the specific polymer singly, or may contain two or more kinds thereof.

Examples of the group having a carboxy group include the following group.

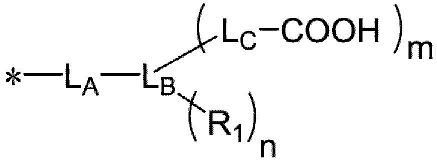

In the above formula, L_{A} and L_{C} each independently represent a single bond or a divalent linking group, L_{B} represents a (m + n + 1)-valent linking group, R₁ represents a hydrogen atom or a monovalent substituent, n represents an integer of 0 or more (and preferably 10 or less, more preferably 5 or less, still more preferably 3 or less, and particularly preferably 2 or less), m represents an integer of 1 or more (and preferably 10 or less, preferably 5 or less, and particularly preferably 3 or less), and a plurality of R₁s or L_{C}s may be the same or different. Furthermore, * represents the position of joining. The monovalent substituent represents, for example, an aliphatic or aromatic hydrocarbon group that has 1 to 10 carbon atoms and may have a hetero atom or a halogen atom.

The divalent linking group of L_{A} or Lc is not particularly limited, and examples of the divalent linking group include -C(O)O-, -OC(O)-, -O-, -S-, -NR₂- (R₂ represents a hydrogen atom or a monovalent substituent), an alkylene group (preferably having 1 to 5 carbon atoms), a cycloalkylene group (preferably having 3 to 5 carbon atoms), an alkenylene group (preferably having 2 to 5 carbon atoms), and combinations thereof. Among the divalent linking groups, - C(O)O-, -OC(O)-, -O-, an alkylene group, an alkenylene group, and combination thereof are preferable, and -C(O)O-, -OC(O)-, -O-, an alkylene group, and combinations thereof are more preferable from the viewpoint of obtaining an integrated body having a more excellent effect of the present invention. The monovalent substituent represents, for example, an aliphatic or aromatic hydrocarbon group that has 1 to 10 carbon atoms and may have a hetero atom or a halogen atom.

The (m + n + 1)-valent linking group of L_{B} is not particularly limited, and in the case of a divalent linking group, examples of the divalent linking group include those exemplified as L_{A} and Lc.

The trivalent or higher valent linking group is not particularly limited, and examples of the linking group include groups represented by Formulas (1a) to (1d) described below.

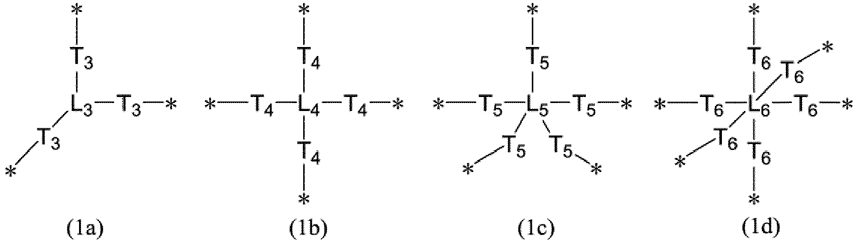

In Formula (1a), L₃ represents a trivalent linking group. T₃ represents a single bond or a divalent linking group, and three T₃s may be the same or different from each other.

Examples of L₃ include trivalent hydrocarbon groups (that preferably have 1 to 10 carbon atoms and may be an aromatic hydrocarbon group or an aliphatic hydrocarbon group) and trivalent heterocyclic groups (that are preferably a 5 to 7-membered heterocyclic group), and the hydrocarbon groups may include a hetero atom (such as -O-). Specific examples of L₃ include a glycerin residue, a trimethylolpropane residue, a phloroglucinol residue, and a cyclohexanetriol residue.

In Formula (1b), L₄ represents a tetravalent group. T₄ represents a single bond or a divalent linking group, and four T₄s may be the same or different from each other.

Examples of the preferable form of L₄ include tetravalent hydrocarbon groups (that preferably have 1 to 10 carbon atoms and may be an aromatic hydrocarbon group or an aliphatic hydrocarbon group) and tetravalent heterocyclic groups (that are preferably a 5 to 7-membered heterocyclic group), and the hydrocarbon groups may include a hetero atom (such as -O-). Specific examples of L₄ include a pentaerythritol residue and a ditrimethylolpropane residue.

In Formula (1c), L₅ represents a pentavalent group. T₅ represents a single bond or a divalent linking group, and five T₅s may be the same or different from each other.

Examples of the preferable form of L₅ include pentavalent hydrocarbon groups (that preferably have 2 to 10 carbon atoms and may be an aromatic hydrocarbon group or an aliphatic hydrocarbon group) and pentavalent heterocyclic groups (that are preferably a 5 to 7-membered heterocyclic group), and the hydrocarbon groups may include a hetero atom (such as -O-). Specific examples of L₅ include an arabinitol residue, a phloroglucidol residue, and a cyclohexanepentaol residue.

In Formula (1d), L₆ represents a hexavalent group. T₆ represents a single bond or a divalent linking group, and six T₆s may be the same or different from each other.

Examples of the preferable form of L₆ include hexavalent hydrocarbon groups (that preferably have 2 to 10 carbon atoms and may be an aromatic hydrocarbon group or an aliphatic hydrocarbon group) and hexavalent heterocyclic groups (that are preferably a 6 to 7-membered heterocyclic group), and the hydrocarbon groups may include a hetero atom (such as -O-). Specific examples of L₆ include a mannitol residue, a sorbitol residue, a dipentaerythritol residue, a hexahydroxybenzene residue, and a hexahydroxycyclohexane residue.

In Formulas (1a) to (1d), specific examples and preferable forms of the divalent linking groups represented by T₃ to T₆ may be the same as those of the divalent linking groups of L_{A} and L_{C} described above.

The specific polymer may have one kind of the group having a carboxy group singly, or may have two or more kinds thereof.

The group having a carboxy group is preferably represented by a formula ^{∗}-L_{D}-COOH (* represents a position of joining) from the viewpoint of obtaining an integrated body having a more excellent effect of the present invention. Here, L_{D} represents a divalent aliphatic hydrocarbon group that may contain a hetero atom (that preferably has 1 to 5 carbon atoms, and more preferably 1 to 4 carbon atoms).

More specifically, the specific polymer is preferably a polymer having a repeating unit represented by Formula (2) described below.

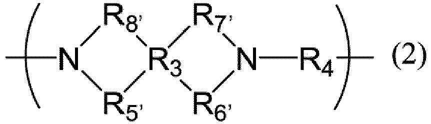

In Formula (2) described above, R₃ represents a tetravalent linking group, R₄ represents a divalent linking group, R_{5'} to R_{8'} each independently represent a carbonyl group or a group represented by -C(R₉)(R₁₀)-, R₉ and R₁₀ each independently represent a hydrogen atom, a monovalent hydrocarbon group that may have a hetero atom (and preferably has 1 to 5 carbon atoms), or the above-described group having a carboxy group. However, at least one of R_{5'} to R_{8'} is a group represented by -C(R₉)(R₁₀)-, and at least one of R₉ or R₁₀ included in the repeating unit represents the above-described group having a carboxy group.

The number of repeating units in this formula may be the number at which the specific polymer has the above-described average molecular weight.

Here, the tetravalent linking group of R₃ is not particularly limited, and examples of the tetravalent linking group include monocyclic aliphatic groups, monocyclic aromatic groups, condensed polycyclic aliphatic groups, and condensed polycyclic aromatic groups. Among the tetravalent linking groups, monocyclic aromatic groups and monocyclic and condensed polycyclic aromatic groups are preferable from the viewpoint of obtaining an integrated body having a more excellent effect of the present invention.

Examples of the monocyclic aromatic group include a benzene ring group and a pyridine ring group. Examples of the condensed polycyclic aromatic group include a naphthalene ring group and a perylene ring group. Examples of the monocyclic aliphatic group include a cyclobutane ring group, a cyclopentane ring group, and a cyclohexane ring group. Examples of the condensed polycyclic aliphatic group include a bicyclo[2.2.1]heptane ring group, a bicyclo[2.2.2]octane ring group, and a bicyclo[2.2.2]oct-7-ene ring group.

Examples of the divalent linking group of R₄ include divalent linking groups having an alicyclic group, divalent linking groups having an aromatic group, and combinations thereof.

The alicyclic group that R₂ may have is preferably a divalent alicyclic group having 3 to 20 carbon atoms, and examples of the alicyclic group include monocyclic cycloalkylene groups such as a cyclopentylene group and a cyclohexylene group, and polycyclic cycloalkylene groups such as a bicyclo[2.2.1]heptylene group, a norbornylene group, a tetracyclodecanylene group, a tetracyclododecanylene group, and an adamantylene group.

The divalent group of R₄ having an alicyclic group may be an alicyclic group itself. Alternatively, it may be a divalent linking group having an alicyclic group in which a plurality of alicyclic groups are connected through an alkylene group (that is preferably an alkylene group having 1 to 6 carbon atoms such as a methylene group, an ethylene group, and a propylene group) to form the divalent linking group having an alicyclic group.

The alicyclic group and the alkylene group capable of forming the divalent linking group having an alicyclic group may have a substituent, and examples of the substituent include alkyl groups (that are preferably an alkyl group having 1 to 4 carbon atoms) and halogen atoms.

### <Metal Atoms>

The bridge layer contains metal atoms. The metal atoms are diffused from the first substrate. Therefore, they are the same kind of metal atoms as the metal atoms contained in the first substrate.

In the case that the first substrate contains two or more kinds of metal atoms, the bridge layer may contain at least one kind of the metal atoms contained in the first substrate, or may contain two or more kinds thereof.

The form of the metal atoms in the bridge layer is as described above. The metal atoms may be present as a simple substance in the bridge layer, or may be present in a state of being joined to another non-metal atom (typically an oxygen atom). A typical example of the latter is a metal oxide.

In the bridge layer, at least a part of the metal atoms is joined to the carboxy group of the specific polymer to form a metal carboxylate structure.

### [Another Step]

In one embodiment, the method for producing an integrated body according to the present invention may further include, in addition to the above-described steps, a step C in which the integrated body is heated. By including the step of heating, an integrated body having further excellent adhesive strength between layers can be obtained.

The heating temperature in this step is not particularly limited, and is generally preferably 75 to 180°C. The heating time is not particularly limited, and is generally preferably 5 minutes to 1 hour.

The atmosphere at the time of heating is not particularly limited, and may be the same atmosphere as in the step A described above.

The method for producing an integrated body according to an embodiment of the present invention can be performed using a known device. For example, the method can be performed using the device described in FIG. 3 of JP-A-2015-51542, and the contents thereof are incorporated in the present description.

According to the method for producing an integrated body according to an embodiment of the present invention, the integrated body can be obtained without adding high thermal energy to the substrate. The integrated body obtained by the method for producing an integrated body according to the present invention has excellent long-term reliability.

In the producing method according to an embodiment of the present invention, a substrate containing metal atoms as the first substrate and a substrate containing a polymer as the second substrate are used, however, even if a substrate containing metal atoms (typically a metal substrate) is used in place of the second substrate, an integrated body having excellent adhesive strength can be obtained.

### [Integrated Body]

The integrated body according to an embodiment of the present invention is an integrated body including: a first substrate that contains metal atoms; a bridge layer; and a second substrate that contains a polymer, in a stated order, wherein the bridge layer contains metal atoms of the same kind as the metal atoms contained in the first substrate, and a specific polymer different from the polymer contained in the second substrate, the specific polymer is a polymer in which a group having a carboxy group is joined to the polymer contained in the second substrate, and at least a part of the carboxy groups are joined to the metal atoms in the bridge layer; wherein the metal atoms contained in the first substrate are metal atoms of the group 3 to the group 13 and the content of the metal atoms in the first substrate is more than 50% by mass based on the total mass of the first substrate.

The integrated body according to another embodiment of the present invention is an integrated body including: a first substrate that contains metal atoms; a bridge layer; and a second substrate that contains a polymer, in a stated order, wherein the bridge layer contains metal atoms of the same kind as the metal atoms contained in the first substrate, and a specific polymer different from the polymer contained in the second substrate, the specific polymer is a polymer in which a group having a carboxy group is joined to the polymer contained in the second substrate, and at least a part of the carboxy groups are joined to the metal atoms in the bridge layer; wherein the first substrate is a heating element, and the second substrate is a toilet seat.

The preferable form of each layer in the integrated body is as described above.

The thickness of the bridge layer is not particularly limited, and is generally preferably 5 nm to 15 mm.

The integrated body is required to have the first substrate, the bridge layer, and the second substrate in this order, and may further have another member or layer.

For example, the integrated body may have a first substrate, a bridge layer, another first substrate, another bridge layer, and a second substrate in the stated order. In this case, the two first substrates may be the same or different. The above-described bonding method between the first substrate and the second substrate can be applied to the bonding between the two first substrates.

The integrated body according to an embodiment of the present invention has excellent long-term reliability because the metal carboxylate structure contributes to the joining between the layers. Such an integrated body can be suitably used in hybrid lightweight structural materials, flexible electronic substrates, and the like.

### [Toilet Seat with Heating Element and Electric Toilet Seat Device]

A toilet seat with a heating element according to an embodiment of the present invention is the above-described laminate in which the first substrate is a heating element and the second substrate is a toilet seat.

An electric toilet seat device according to an embodiment of the present invention has the above-described toilet seat with a heating element.

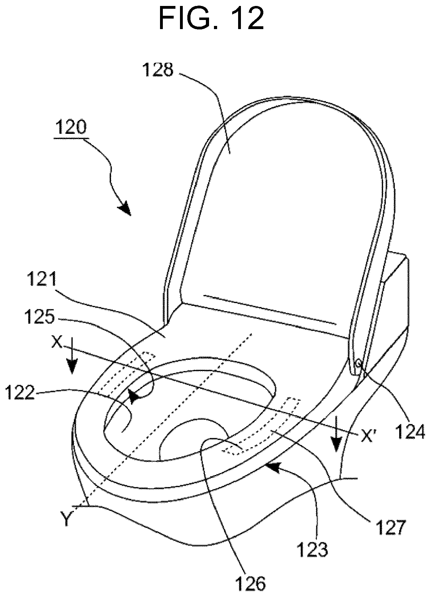

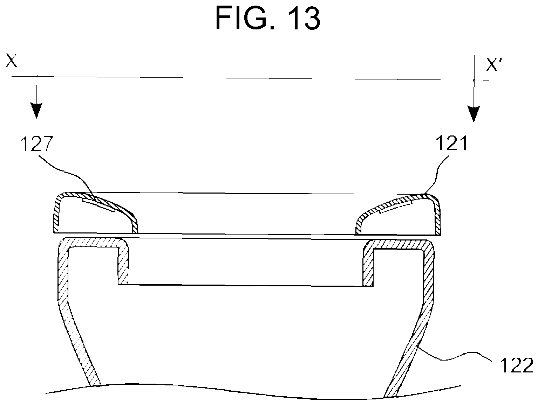

The electric toilet seat device according to an embodiment of the present invention will be described with reference to FIGS. 12 and 13. The same or equivalent constituent elements and members shown in each drawing are designated by the same reference numerals, and duplicated description will be appropriately omitted. The dimensions of the members in each drawing are appropriately enlarged or reduced for easy understanding. Furthermore, in each drawing, some of the members that are not important for describing the embodiment are not shown.

FIG. 12 is a perspective view showing a main part of the electric toilet seat device. An electric toilet seat device 120 includes a toilet bowl 122, a toilet seat 121 placed on a rim 123 of the toilet bowl 122, and a lid 128. The toilet seat 121 and the lid 128 are attached to the toilet bowl 122 so that they can rotate around a hinge 124 as a fulcrum, and can be raised and lowered with respect to the toilet bowl 122. The toilet seat 121 is formed so as to be longer along the front-rear axis than along the left-right axis, has a center hole 125 formed near its center, and has a space formed inside the center hole 125. In particular, the space is a space extending vertically and is a region surrounded by the center hole 125.

FIG. 13 is a schematic cross-sectional view taken along the axis X-X' of the electric toilet seat device 120 with the toilet seat 121 closed. The toilet seat 121 mainly includes, inside, a heating element 127 typically made from an electric heating element in order to heat a heating face 126 provided on the upper face.

As shown in FIG. 12, when the side on which the hinge 124 of the toilet seat 121 is provided is designated as the rear, and the opposite side is designated as the front (along the axis represented by "Y" in FIG. 12), the lid 128 and the toilet seat 121 can be raised and opened, and lowered and closed from the front to the rear.

The kind of the material of the toilet seat is not particularly limited as long as the material is the above-described material of the second substrate. Non-limiting examples of the material from the viewpoint of further easy molding by an injection molding method include polyolefin-based polymers and styrene-based polymers (such as a polystyrene resin, a HIPS (High Impact Polystyrene) resin, and an ABS (Acrylonitrile Butadiene Styrene) resin).

The kind of the material of the heating element is not particularly limited as long as the material is the above-described material of the first substrate. As a non-limiting example of the material, a material containing metal atoms capable of forming a hydrate is preferable, and examples of such a metal species include tungsten, molybdenum, and tantalum. More specifically, examples of the material of the heating element include simple substances of the above-described metals, tungsten carbide, and molybdenum carbide. The structure of the heating element is not particularly limited, and may be linear or planar.

As the method for producing the toilet seat with a heating element, the above-described method for producing an integrated body can be applied. That is, the method can be applied in which a toilet seat comprised of the second substrate produced by the above-described method and a heating element comprised of the first substrate are joined by the above-described method to obtain an integrated body.

The toilet seat with a heating element obtained by the above-described method has excellent long-term reliability even if the polymer forming the toilet seat is a polymer that has been conventionally considered to be difficult to bond to a metal, a metal oxide, and the like (typically a polyolefin-based material).

### EXAMPLES

Hereinafter, the present invention will be described in more detail based on Examples. The materials, usage amounts, ratios, processes, processing procedures, and the like shown in Examples described below can be appropriately changed without departing from the spirit of the present invention. Therefore, the scope of the present invention should not be limitedly interpreted by Examples.

### [Evaluation of Precursor Layer Formed on Al Substrate]

### (Test 1)

An Al substrate (corresponding to a metal substrate) was prepared as the first substrate, and irradiated with a vacuum ultraviolet ray (wavelength: 172 nm, intensity: about 5 mW/cm² on the surface of the Al substrate) for 5 minutes. At this time, the atmospheric temperature was room temperature (24°C). The atmosphere contained nitrogen and ethanol, and the relative humidity of ethanol in the atmosphere was 9.45%RH, 16.90%RH, and 24.85%RH.

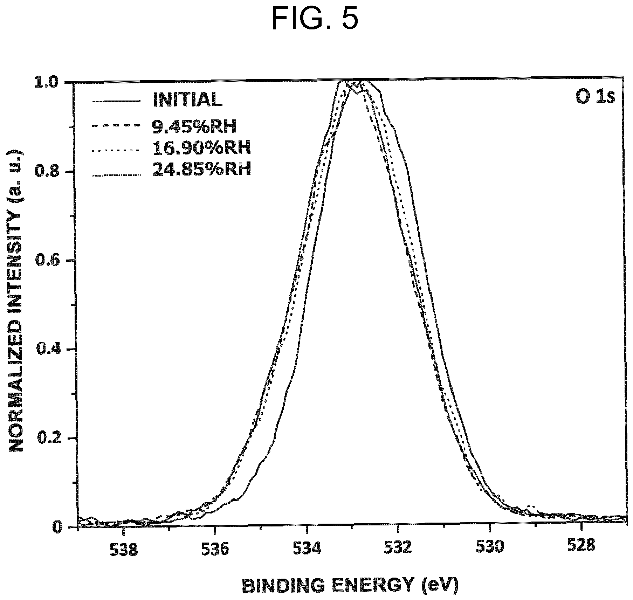

FIGS. 5 to 8 show results of X-ray photoelectron spectrometer (XPS) measurement of the surface of the side irradiated with the vacuum ultraviolet ray (precursor layer side) of the Al substrate. More specifically, FIGS. 5 to 8 show O1s spectra showing a change in the bond state of oxygen in the precursor layer formed on the Al substrate.

FIG. 5 shows O1s spectra of the Al substrate with a precursor layer (a) irradiated with the ultraviolet ray under different conditions of relative humidity (RH) of ethanol in the atmosphere and, for comparison, an O1s spectrum of the Al substrate before the irradiation with the ultraviolet ray. Each spectrum is normalized with each maximum intensity (vertical axis). The horizontal axis of the graph shows binding energy.

The legend "initial" described in FIG. 5 shows the spectrum of the Al substrate before the irradiation with the ultraviolet ray, and "9.45%RH", "16.90%RH", and "24.86%RH" show the spectrum under a relative humidity of ethanol in the atmosphere of 9.45%RH, 16.90%RH, and 24.85%RH, respectively.

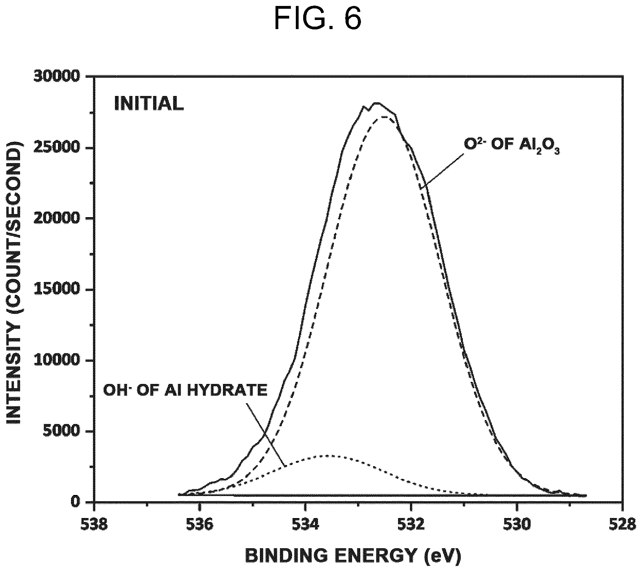

FIGS. 6 to 8 respectively show a result of separating the waveform of the O1s spectrum of the Al substrate before the irradiation with the ultraviolet ray, the Al substrate with the precursor layer (a) under a relative humidity of ethanol in the atmosphere of 9.45 RH%, and the Al substrate with the precursor layer (a) under a relative humidity of ethanol in the atmosphere of 24.85 RH% to identify the chemical bond state from which each peak energy originates.

The National Institute of Standards and Technology (NIST) database and the like were used for the energy identification.

From FIG. 6, the O1s spectrum of the Al substrate before the irradiation with the ultraviolet ray (designated as "Initial" in the figure) mainly includes peaks derived from O²⁻ (derived from Al₂O₃) and OH⁻ (derived from Al hydrate). From this result, it was found that the natural oxide (Al₂O₃) and its outermost hydrate were predominantly present.

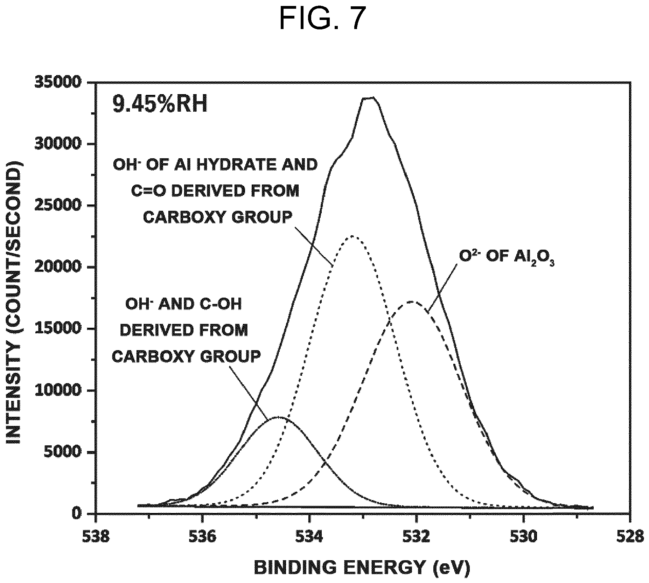

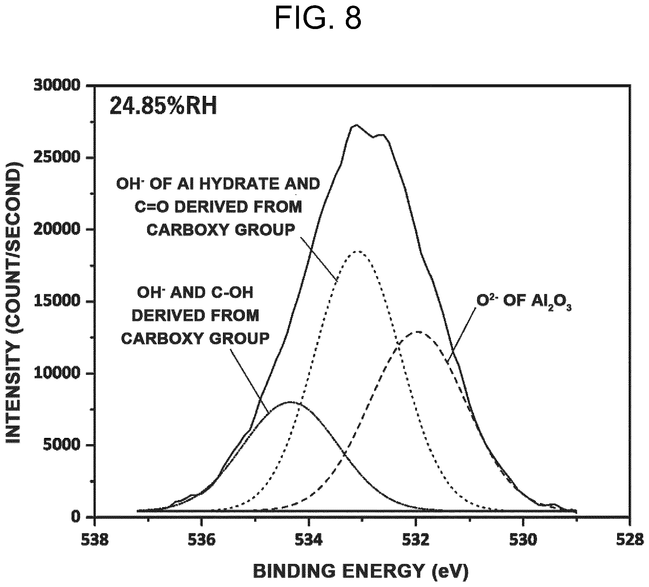

From FIGS. 7 and 8, on the surface of the Al substrate irradiated with the vacuum ultraviolet ray in the atmosphere containing ethanol, peaks derived from C=O and C-OH were detected. It can be seen that the ratio of each of these peaks with respect to the peak derived from the oxide increases as the relative humidity of ethanol in the atmosphere increases. It is considered that C=O and C-OH are derived from the carboxy group that is the source of the metal carboxylate cross linking (metal carboxylate structure).

### (Test 2)

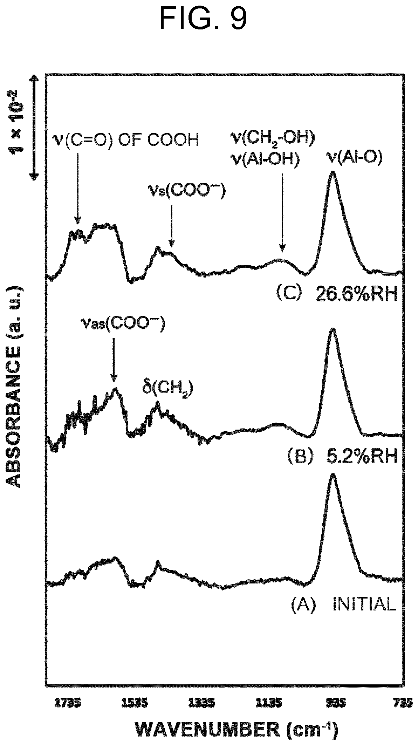

FIG. 9 shows measurement results of FT-IR (Fourier transform infrared spectrometer) of the substrate with the precursor layer (a) prepared in the same manner as in Test 1 except that the relative humidity of ethanol in the atmosphere was 5.2 RH% (B) and 26.6 RH% (C), and a measurement result, as a comparison, of FT-IR of the Al substrate before the irradiation with the ultraviolet ray (initial) (A). The vertical axis of the graph shows the absorbance, and the horizontal axis shows the wavenumber.

From FIG. 9, it was confirmed that the peaks of C=O and COO⁻ derived from the carboxy group were preferentially grown with respect to the hydrate as the content of ethanol in the atmosphere increased. From this result, it can be found that the desired surface modification effect was obtained.

### [Example 1]

An integrated body was prepared using the same device as the device described in FIG. 3 of JP-A-2015-51542. First, on each one of stages arranged so as to face each other in the chamber, a first substrate (i.e. an Al substrate having a thickness of 150 nm deposited on an Si support having a thickness of 0.5 mm) and a second substrate (i.e. a polyimide sheet "Kapton (registered trademark)-HN" produced by DuPont having a thickness of 25 µm) were placed. Next, the inside of the chamber was depressurized (evacuated), and then a gas in which high-purity nitrogen and atomized ethanol were mixed was introduced to prepare an atmospheric pressure atmosphere. At this time, the relative humidity of ethanol in the atmosphere was 25% RH and the temperature was 24°C.

The high-purity nitrogen was introduced from an introduction path connected to the chamber, and the ethanol was atomized with an ultrasonic atomizer to have a diameter of about 5 µm or less.

Next, the first substrate and the second substrate were each irradiated with a vacuum ultraviolet ray for 10 minutes to form a precursor layer on each substrate.

Next, the precursor layers were brought into contact with each other at room temperature, then pressed at a surface pressure of 0.04 MPa, and kept at 150°C for 5 minutes to obtain an integrated body.

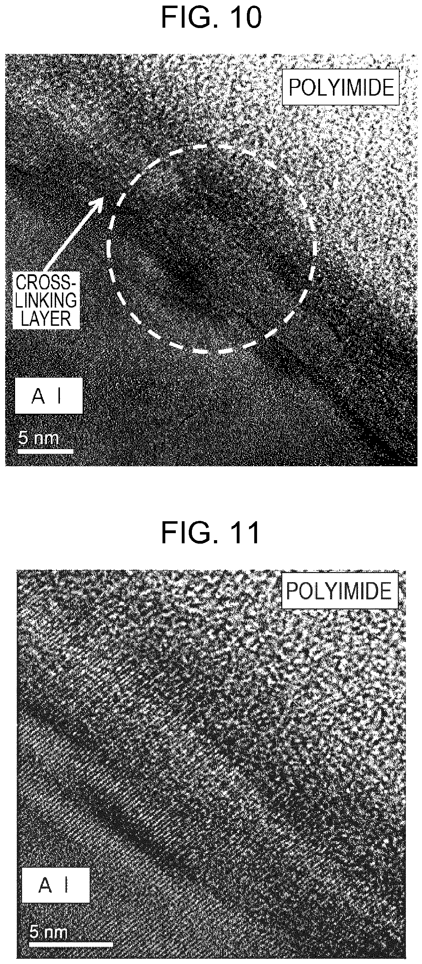

FIG. 10 shows a transmission electron microscope (TEM) image of the bonding interface (bridge layer) between the Al substrate and the polyimide substrate. From FIG. 10, the state was observed in which the two substrates were in close contact with each other at the atomic level via the bridge layer in the entire observation region, and no significant void was present.

FIG. 11 is an enlarged view of the region surrounded by the circular broken line in the image of FIG. 10 (bridge layer). In FIG. 11, a crystal lattice image penetrating the bridge layer from the side of the Al substrate was observed, and it was seen that the mutual diffusion was favorably promoted even under the condition of a temperature that was lower than the conventional method. No clear grain boundary-like interface that could be a main crack propagation path was observed in the entire observation region, and a fracture mode inside the substrate was observed in the tensile test. The microstructure of the interface did not change significantly even in a bonded body that had been left in the general atmosphere for half a year or more, and the similar strength test result was obtained, so that it has been found that the integrated body has excellent long-term reliability.

### REFERENCE SIGNS LIST

- 11: First substrate
- 12: Second substrate
- 20: First substrate with a precursor layer (a)
- 21: Precursor layer (a)
- 22: Second substrate with a precursor layer (b)
- 23: Precursor layer (b)
- 31: Integrated body
- 32: Bridge layer
- 120: Electric toilet seat device
- 121: Toilet seat
- 122: Toilet bowl
- 123: Rim
- 124: Hinge
- 125: Center hole
- 126: Heating face
- 127: Heating element
- 128: Lid

## Claims

1. A method for producing an integrated body having, in a stated order, a first substrate that contains metal atoms, a bridge layer, and a second substrate that contains a polymer, the method comprising:
a step A in which, in an atmosphere that contains at least one alcohol compound selected from the group consisting of primary alcohols and secondary alcohols, the first substrate and the second substrate are each irradiated with an ultraviolet ray,
a precursor layer (a) that contains a metal carboxylate compound in which the metal atoms and a carboxylic acid are joined is formed on the first substrate, and
a precursor layer (b) that contains a cross-linkable polymer in which a cross-linkable group is joined to the polymer is formed on the second substrate; and
a step B in which the precursor layer (a) and the precursor layer (b) are brought into contact with each other and the bridge layer is formed to produce the integrated body;
wherein the metal atoms contained in the first substrate are metal atoms of the group 3 to the group 13 and the content of the metal atoms in the first substrate is more than 50% by mass based on the total mass of the first substrate.

2. The method for producing an integrated body according to claim 1, wherein the metal atoms are capable of forming a hydrate.

3. The method for producing an integrated body according to claim 1 or 2, further comprising a step C in which the integrated body is heated after the step B.

4. The method for producing an integrated body according to any one of claims 1 to 3, wherein the ultraviolet ray is a vacuum ultraviolet ray.

5. An integrated body comprising:
a first substrate that contains metal atoms; a bridge layer; and a second substrate that contains a polymer, in a stated order, wherein
the bridge layer contains metal atoms of the same kind as the metal atoms, and a specific polymer different from the polymer contained in the second substrate,
the specific polymer is a polymer in which a group having a carboxy group is joined to the polymer contained in the second substrate, and
at least a part of the carboxy group is joined to the metal atoms in the bridge layer;
wherein the metal atoms contained in the first substrate are metal atoms of the group 3 to the group 13 and the content of the metal atoms in the first substrate is more than 50% by mass based on the total mass of the first substrate.

6. The integrated body according to claim 5, wherein the first substrate is a heating element, and the second substrate is a toilet seat.

7. An integrated body comprising:
a first substrate that contains metal atoms; a bridge layer; and a second substrate that contains a polymer, in a stated order, wherein
the bridge layer contains metal atoms of the same kind as the metal atoms, and a specific polymer different from the polymer contained in the second substrate,
the specific polymer is a polymer in which a group having a carboxy group is joined to the polymer contained in the second substrate, and
at least a part of the carboxy group is joined to the metal atoms in the bridge layer;
wherein the first substrate is a heating element, and the second substrate is a toilet seat.

8. An electric toilet seat device comprising the integrated body according to claim 6 or 7.

## Patentansprüche

1. Verfahren zum Herstellen eines integrierten Körpers mit, in einer genannten Reihenfolge, einem ersten Substrat, das Metallatome enthält, einer Brückenschicht und einem zweiten Substrat, das ein Polymer enthält, wobei das Verfahren Folgendes umfasst:
einen Schritt A, in dem, in einer Atmosphäre, die mindestens eine Alkoholverbindung enthält, ausgewählt aus der Gruppe, bestehend aus primären Alkoholen und sekundären Alkoholen, das erste Substrat und das zweite Substrat jeweils mit einem Ultraviolettstrahl bestrahlt werden,
eine Vorläuferschicht (a), die eine Metallcarboxylatverbindung enthält, in der die Metallatome und eine Carbonsäure verbunden sind, ist auf dem ersten Substrat gebildet, und
eine Vorläuferschicht (b), die ein vernetztes Polymer enthält, in dem eine vernetzbare Gruppe mit dem Polymer verbunden ist, ist auf dem zweiten Substrat gebildet; und
einen Schritt B, in dem die Vorläuferschicht (a) und die Vorläuferschicht (b) in Kontakt miteinander gebracht werden und die Brückenschicht gebildet wird, um den integrierten Körper herzustellen;
wobei die Metallatome, die im ersten Substrat enthalten sind, Metallatome der Gruppe 3 bis zur Gruppe 13 sind und der Inhalt der Metallatome im ersten Substrat mehr als 50 Masse-% beträgt, basierend auf der Gesamtmasse des ersten Substrats.

2. Verfahren zum Herstellen eines integrierten Körpers nach Anspruch 1, wobei die Metallatome in der Lage sind, ein Hydrat zu bilden.

3. Verfahren zum Herstellen eines integrierten Körpers nach Anspruch 1 oder 2, ferner umfassend einen Schritt C, in dem der integrierte Körper nach Schritt B erhitzt wird.

4. Verfahren zum Herstellen eines integrierten Körpers nach einem der Ansprüche 1 bis 3, wobei der Ultraviolettstrahl ein Vakuumultraviolettstrahl ist.

5. Integrierter Körper, umfassend:
ein erstes Substrat, das Metallatome enthält; eine Brückenschicht; und ein zweites Substrat, das ein Polymer enthält, in einer genannten Reihenfolge, wobei
die Brückenschicht Metallatome der gleichen Art wie die Metallatome enthält und ein spezifisches Polymer, das anders als das Polymer ist, das im zweiten Substrat enthalten ist,
wobei das spezifische Polymer ein Polymer ist, in dem eine Gruppe mit einer Carboxygruppe mit dem Polymer verbunden ist, das im zweiten Substrat enthalten ist, und
wobei mindestens ein Teil der Carboxygruppe mit den Metallatomen in der Brückenschicht verbunden ist;
wobei die Metallatome, die im ersten Substrat enthalten sind, Metallatome der Gruppe 3 bis zur Gruppe 13 sind, und der Inhalt der Metallatome im ersten Substrat mehr als 50 Masse-% beträgt, basierend auf der Gesamtmasse des ersten Substrats.

6. Integrierter Körper nach Anspruch 5, wobei das erste Substrat ein Heizelement ist und das zweite Substrat ein Toilettensitz ist.

7. Integrierter Körper, umfassend:
ein erstes Substrat, das Metallatome enthält; eine Brückenschicht; und ein zweites Substrat, das ein Polymer enthält, in einer genannten Reihenfolge, wobei
die Brückenschicht Metallatome der gleichen Art wie die Metallatome enthält und ein spezifisches Polymer, das anders als das Polymer ist, das im zweiten Substrat enthalten ist,
wobei das spezifische Polymer ein Polymer ist, in dem eine Gruppe mit einer Carboxygruppe mit dem Polymer verbunden ist, das im zweiten Substrat enthalten ist, und
wobei mindestens ein Teil der Carboxygruppe mit den Metallatomen in der Brückenschicht verbunden ist;
wobei das erste Substrat ein Heizelement ist und das zweite Substrat ein Toilettensitz ist.

8. Elektrische Toilettensitzvorrichtung, umfassend den integrierten Körper nach Anspruch 6 oder 7.

## Revendications

1. Procédé pour produire un corps intégré ayant, dans un ordre indiqué, un premier substrat qui contient des atomes de métal, une couche de pont, et un second substrat qui contient un polymère, le procédé comprenant :
une étape A, dans laquelle, dans une atmosphère qui contient au moins un composé alcool sélectionné parmi le groupe constitué d'alcools primaires et d'alcools secondaires, le premier substrat et le second substrat sont chacun irradiés avec un rayon ultraviolet,
une couche de précurseur (a), qui contient un composé carboxylate de métal dans lequel les atomes de métal et un acide carboxylique sont j oints, est formée sur le premier substrat, et
une couche de précurseur (b), qui contient un polymère réticulable dans lequel un groupe réticulable est joint au polymère, est formée sur le second substrat ; et
une étape B, dans laquelle la couche de précurseur (a) et la couche de précurseur (b) sont mises en contact l'une avec l'autre et la couche de pont est formée pour produire le corps intégré ;
dans lequel les atomes de métal contenus dans le premier substrat sont des atomes de métal du groupe 3 au groupe 13 et la teneur en les atomes de métal dans le premier substrat est supérieure à 50 % en masse sur la base de la masse totale du premier substrat.

2. Procédé pour produire un corps intégré selon la revendication 1, dans lequel les atomes de métal sont capables de former un hydrate.

3. Procédé pour produire un corps intégré selon la revendication 1 ou 2, comprenant en outre une étape C, dans laquelle le corps intégré est chauffé après l'étape B.

4. Procédé pour produire un corps intégré selon l'une quelconque des revendications 1 à 3, dans lequel le rayon ultraviolet est un rayon ultraviolet du vide.

5. Corps intégré, comprenant :
un premier substrat qui contient des atomes de métal ; une couche de pont ; et un second substrat qui contient un polymère, dans un ordre indiqué, dans lequel
la couche de pont contient des atomes de métal du même type que les atomes de métal, et un polymère spécifique différent du polymère contenu dans le second substrat,
le polymère spécifique est un polymère dans lequel un groupe ayant un groupe carboxy est joint au polymère contenu dans le second substrat, et
au moins une partie du groupe carboxy est jointe aux atomes de métal dans la couche de pont ;
dans lequel les atomes de métal contenus dans le premier substrat sont des atomes de métal du groupe 3 au groupe 13 et la teneur en les atomes de métal dans le premier substrat est supérieure à 50 % en masse sur la base de la masse totale du premier substrat.

6. Corps intégré selon la revendication 5, dans lequel le premier substrat est un élément chauffant, et le second substrat est un siège de toilettes.

7. Corps intégré, comprenant :
un premier substrat qui contient des atomes de métal ; une couche de pont ; et un second substrat qui contient un polymère, dans un ordre indiqué, dans lequel
la couche de pont contient des atomes de métal du même type que les atomes de métal, et un polymère spécifique différent du polymère contenu dans le second substrat,
le polymère spécifique est un polymère dans lequel un groupe ayant un groupe carboxy est joint au polymère contenu dans le second substrat, et
au moins une partie du groupe carboxy est jointe aux atomes de métal dans la couche de pont ;
dans lequel le premier substrat est un élément chauffant, et le second substrat est un siège de toilettes.

8. Dispositif électrique de siège de toilettes, comprenant le corps intégré selon la revendication 6 ou 7.
